# EUROPÄISCHE PATENTANMELDUNG

(11) **EP 1 455 105 A1**
(43) Veröffentlichungstag der Anmeldung: **08.09.2004**
(21) Anmeldenummer: 04004795.3
(22) Anmeldetag: 02.03.2004
(51) Int. Cl.: F16D 13/71, F16D 13/75

(54) **Anpressplatte für eine Reibungskupplung**

(30) Priorität: 07.03.2003 DE 10309939
(71) Anmelder: Sachs Race Engineering GmbH, 97424 Schweinfurt (DE)
(72) Erfinder: Rudolf, Thomas, 97422 Schweinfurt (DE); Fischer, Klaus, 97437 Hassfurt (DE); Loibersbeck, Jürgen, 97506 Grafenrheinfeld (DE); Selzam, Werner, 97537 Wipfeld (DE); Wittholz, Jan, 97453 Schonungen (DE); Huisjes, Arnold, 97424 Schweinfurt (DE)

(57) **Zusammenfassung**

Eine Anpressplatte für eine Reibungskupplung umfasst einen ringartigen Anpressplattenkörper (12), der an einer ersten axialen Seite (14) eine Druckfläche zur Druckbeaufschlagung von Reiborgangen aufweist und an einer zweiten axialen Seite (16) als separates Bauteil wenigstens ein Abstützelement (20) zur Druckbeaufschlagung der Anpressplatte (10) durch eine Kraftbeaufschlagungsanordnung (50), insbesondere Membranfeder, aufweist.

## Beschreibung

Die vorliegende Erfindung betrifft eine Anpressplatte für eine Reibungskupplung.

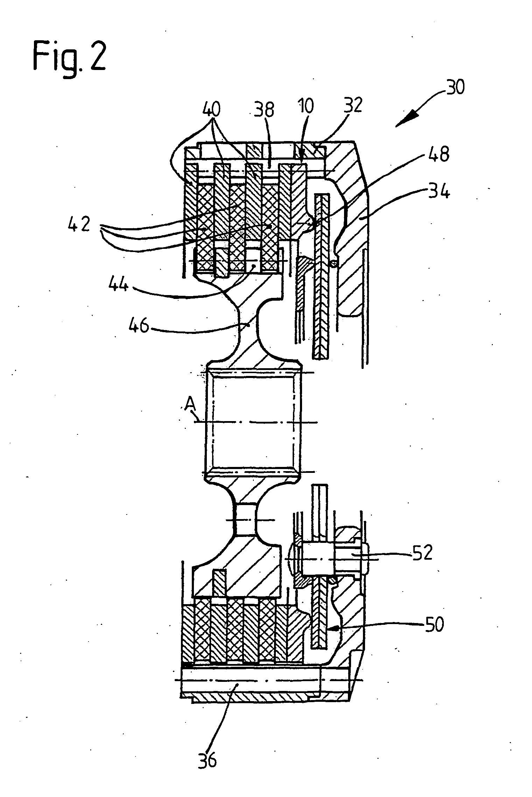

In Fig. 2 ist eine Reibungskupplung gezeigt, wie sie beispielsweise im Rennsportbereich oder bei Kraftfahrzeugen mit leistungs- bzw. drehmomentenstarken Antriebsaggregaten zum Einsatz kommt. Derartige auch als Lamellenkupplungen bezeichnete Reibungskupplungen 30 weisen ein im Wesentlichen ringartig ausgebildetes Gehäuse 32 auf, das an einer axialen Seite mit einem Gehäusedeckel 34 fest verbunden oder integral ausgebildet ist und das an der anderen axialen Seite durch durch Öffnungen 36 hindurchführbare Schraubbolzen an ein Schwungrad o.dgl. angekoppelt werden kann. An einer Innenumfangsfläche bildet das Gehäuse 32 eine in Richtung einer Drehachse A langgestreckte Verzahnungsformation, mit welcher mehrere als Außenlamellen zu bezeichnende Reiborgane 40 durch entsprechende Verzahnungsformationen drehfest, jedoch in Richtung der Achse A verschiebbar eingreifen. Zwischen jeweils zwei dieser Außenlamellen 40 liegt ein als Innenlamelle 42 zu bezeichnendes Reiborgan. Diese Innenlamellen 42 weisen an ihrer Innenseite eine Verzahnungsformation auf, die mit einer entsprechenden in Achsrichtung langgestreckten Verzahnungsformation 44 einer Nabe 46 drehfest, in Richtung der Achse A jedoch bewegbar eingreift. Ebenso wie die Außenlamellen 40, ist auch eine Anpressplatte 10 mit dem Gehäuse 32 drehfest, jedoch in Richtung der Achse A verschiebbar gekoppelt. Die Anpressplatte 10 beaufschlagt über eine Außenlamelle 40 das aus Außenlamellen 40 und Innenlamellen 42 bestehende Lamellenpaket, so dass im eingerückten Zustand über diesen so hergestellten Reibschluss ein Drehmoment zwischen dem Gehäuse 32 und der Nabe 46 übertragen werden kann.

Die Anpressplatte 40 steht an einem erhöhungsartig ausgebildeten Schneidenbereich 48 unter der Beaufschlagung einer hier als Membranfeder 50 ausgebildeten Kraftbeaufschlagungsanordnung. Diese ist beispielsweise unter Einsatz von Distanzbolzen 52 o.dgl. am Gehäuse 32 bzw. am Gehäusedeckel 34 gehalten und stützt sich dort zur Reaktionskrafterzeugung ab.

Insbesondere bei Einsatz im Rennsportbereich bzw. bei Einsatz im Bereich hochwertiger Fahrzeuge werden auf Grund der bei derartigen Fahrzeugen auftretenden Belastungen für die einzelnen Komponenten der in der Fig. 2 gezeigten Reibungskupplung allgemein auch sehr hochwertige Materialien eingesetzt. So kommen beispielsweise für die verschiedenen Reiborgane Karbonmaterialien zum Einsatz. Für die verschiedenen Gehäuseteile und die Anpressplatte kommen neben dem Einsatz von Stahlmaterial auch Titanlegierungen zum Einsatz. Der Einsatz derart hochwertiger Materialien führt jedoch zu entsprechend hohen Kosten.

Es ist die Aufgabe der vorliegenden Erfindung, die bei einer Reibungskupplung bzw. einer Anpressplatte dafür verschleißbedingt vorzunehmenden Austauschmaßnahmen so weit als möglich zu reduzieren.

Gemäß der vorliegenden Erfindung wird diese Aufgabe gelöst durch eine Anpressplatte für eine Reibungskupplung, umfassend einen ringartigen Anpressplattenkörper, der an einer ersten axialen Seite eine Druckfläche zur Druckbeaufschlagung von Reiborgangen aufweist und an einer zweiten axialen Seite als separates Bauteil wenigstens ein Abstützelement zur Druckbeaufschlagung der Anpressplatte durch eine Kraftbeaufschlagungsanordnung, insbesondere Membranfeder, aufweist.

Insbesondere im Bereich der gegenseitigen Anlage zwischen Anpressplatte und Kraftbeaufschlagungsanordnung entstehen sehr hohe Belastungen, die zu einem vergleichsweise starken Verschleiß der Anpressplatte in diesem Bereich führen. Ein Verschleiß in diesem Bereich bedeutet jedoch, dass zum Aufrechterhalten der erforderlichen Kupplungsfunktion ein Austausch des verschlissenen Bauteils vorgenommen werden muss. Der Austausch der Anpressplatte dient zum Ausgleich der verschlissenen Reibscheiben. Falls die Reibscheiben an Dicke verlieren, wird dies durch eine dickere Anpressplatte ausgeglichen. Während bei dem in Fig. 2 gezeigten Stand der Technik hierzu der Austausch der vollständigen Anpressplatte erforderlich ist, kann mit der erfindungsgemäß aufgebauten Anpressplatte der wesentliche Teil derselben, nämlich der Anpressplattenkörper, in der Kupplung verbleiben, während lediglich das oder die Abstützelemente ausgetauscht werden, die durch die Beaufschlagung der Kraftbeaufschlagungsanordnung abgenutzt worden sind. Dies führt neben der Tatsache, dass die Austauscharbeiten deutlich einfacher vorgenommen werden können, zu deutlich reduzierten Kosten beim Wiederaufarbeiten einer derartigen Anpressplatte bzw. einer diese aufweisenden Reibungskupplung.

Um eine stabile Halterung des wenigstens einen Abstützelements vorsehen zu können, wird vorgeschlagen, dass der Anpressplattenkörper an der zweiten axialen Seite eine Einsenkung aufweist, in welcher das Abstützelement wenigstens teilweise aufgenommen ist.

Ferner kann dazu vorgesehen sein, dass das wenigstens eine Abstützelement in der zugeordneten Einsenkung gegen Bewegung in Umfangsrichtung gehalten ist.

Zur Wechselwirkung mit einer Kraftbeaufschlagungsanordnung wird vorgeschlagen, dass das wenigstens eine Abstützelement einen Abstützvorsprung für die Kraftbeaufschlagungsanordnung aufweist.

Zum Vermeiden von Unwuchten und zum Erhalt eines möglichst einfachen Aufbaus wird vorgeschlagen, dass das Abstützelement ringartig ausgebildet ist.

Der Anpressplattenkörper kann aus Stahlmaterial oder Titanlegierung gebildet sein. Vorzugsweise ist weiter vorgesehen, dass das wenigstens eine Abstützelement aus dem gleichen Material aufgebaut ist, wie der Anpressplattenkörper. Dies hat den elementaren Vorteil, dass im Bereich des Anpressplattenkörpers und im Bereich des wenigstens einen Abstützelements gleiche thermische Ausdehnungsverhältnisse vorliegen und insofern das thermisch bedingte Auftreten von Zwängungen oder in der Anpressplatte selbst entstehenden Verspannungen vermieden werden kann.

Die vorliegende Erfindung wird nachfolgend mit Bezug auf die beiliegenden Zeichnungen beschrieben. Es zeigt:
- Fig. 1: eine Längsschnittansicht einer erfindungsgemäßen Anpressplatte;
- Fig. 2: eine Längsschnittansicht einer aus dem Stand der Technik bekannten Lamellenkupplung.

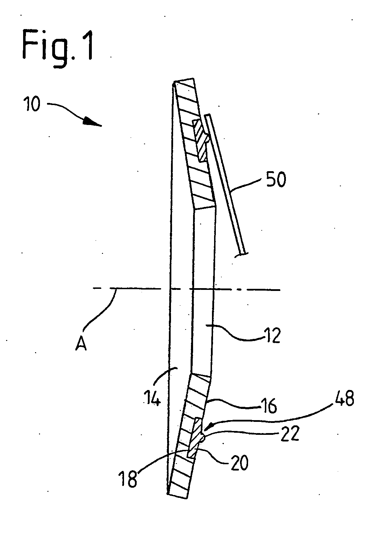

In Fig. 1 ist eine Anpressplatte 10 gezeigt, die grundsätzlich auch bei der in Fig. 2 dargestellten Lamellenkupplung 30 zum Einsatz gelangen kann.

Die gemäß den Prinzipien der vorliegenden Erfindung aufgebaute Anpressplatte 10 weist einen ringartig ausgebildeten Anpressplattenkörper 12 auf. An seiner axialen Seite 14 belastet der Anpressplattenkörper 12 im Einrückzustand Reiborgane, also beispielsweise die in Fig. 3 gezeigten Lamellen 40, 42, um diese in gegenseitige Reibanlage zu bringen. An der entgegensetzten axialen Seite 16 weist der Anpressplattenkörper 12 eine vorzugsweise ringartig umlaufende Einsenkung 18 auf, welche zur Drehachse bzw. Symmetrieachse A des Anpressplattenkörpers 12 zentrisch positioniert ist. In diese Einsenkung 18 ist ein ebenfalls ringartig umlaufend ausgebildetes Abstützelement 20 eingesetzt. Das Abstützelement 20 ist im Wesentlichen vollständig in der Einsenkung 18 aufgenommen und steht an der axialen Seite 16 des Anpressplattenkörpers 12 mit einem den in Fig. 2 erkennbaren Schneidenbereich 48 bereitstellenden Abstützvorsprung 22 zur Beaufschlagung durch die Membranfeder 50 oder eine sonstige Kraftbeaufschlagungsanordnung über. Man erkennt in Fig. 1, dass auch bei der erfindungsgemäß ausgestalteten Anpressplatte 10 dieser Abstützvorsprung 22 im Schnitt eine kuppelartige oder kreisförmige Kontur aufweist, um die geeignete Anlagewechselwirkung mit der Membranfeder 50 vorsehen zu können.

Ein gegenseitiges Verdrehen des ringartigen Abstützelements 20 bezüglich des Anpressplattenkörpers 12 kann dadurch vermieden werden, dass beispielsweise im Bodenbereich der Einsenkung 18 an verschiedenen Bereichen weitere Vertiefungen bzw. Erhebungen gebildet sind, die mit entsprechenden Formationen am Abstützelement 20 in formschlüssigem Eingriff stehen.

Der Anpressplattenkörper 12 und das Abstützelement 20 sind vorzugsweise aus dem gleichen Material aufgebaut, also beispielsweise Stahlmaterial oder einer Titanlegierung. Dies hat den Vorteil, dass auch bei Erwärmung dieser beiden Bauteile 12, 20 das ansonsten im Wesentlichen lose in der Einsenkung 18 liegende Abstützelement 20 sich in gleicher Art und Weise dehnen bzw. zusammenziehen wird, wie der Anpressplattenkörper 12. Das Auftreten von Verspannungen zwischen diesen beiden Bauteilen kann somit vermieden werden. Um im Auskuppelzustand, in welchem die Membranfeder 50 sich von dem Abstützelement 20 weg bewegt, zu verhindern, dass das Abstützelement 20 sich aus der Einsenkung 18 herausbewegt, sollte darauf geachtet werden, dass die Tiefe der Einsenkung 18 bzw. die Eintauchtiefe des Abstützelements 20 in diese Einsenkung 18 so bemessen ist, dass sie größer ist, als der Relativaxialweg, den das Abstützelement 20 bei nicht vorhandener Kraftbeaufschlagung bezüglich des Anpressplattenkörpers 12 durchführen kann.

Man erkennt weiter in Fig. 1, dass der Anpressplattenkörper 12 leicht konisch bzw. schirmartig ausgebildet ist, so dass er im radial inneren Bereich etwas weiter von der unmittelbar folgenden Lamelle entfernt ist, als im radial äußeren Bereich. Auf diese Art und Weise kann in die Anpressplatte 10 eine axiale Elastizität integriert werden, die die Funktion von Belagsfederungen bei herkömmlichen Kupplungsscheiben übernehmen kann. Auf Grund dieser leicht konischen bzw. schirmartigen Ausgestaltung des Anpressplattenkörpers 12 ist auch das Abstützelement 20 mit entsprechender Formgebung bereitgestellt.

Es sei darauf hingewiesen, dass selbstverständlich bei der erfindungsgemäßen Anpressplatte 10 nicht zwangsweise ein ringartig umlaufendes Abstützelement 20 eingesetzt werden muss. Es ist grundsätzlich auch möglich, an mehreren Umfangspositionen diskrete, beispielsweise kreisringsegmentartig ausgebildete Abstützelemente in entsprechenden Einsenkungen vorzusehen. Auf Grund des Vermeidens von Unwuchten und zur Bereitstellung eines in Umfangsrichtung vollständig umlaufenden Abstützvorsprungs 22 ist jedoch die ringartige Ausgestaltung des Abstützelements vorteilhaft.

Abschließend sei darauf hingewiesen, dass selbstverständlich die erfindungsgemäße Anpressplatte auch bei andersartig aufgebauten Reibungskupplungen, also Reibungskupplungen mit Anpressplatte, Kupplungsscheibe und Schwungrad, bei Doppelkupplungen, bei Mehrscheibenkupplungen o.dgl. Anwendung finden kann.

## Patentansprüche

1. Anpressplatte für eine Reibungskupplung, umfassend einen ringartigen Anpressplattenkörper (12), der an einer ersten axialen Seite (14) eine Druckfläche zur Druckbeaufschlagung von Reiborgangen aufweist und an einer zweiten axialen Seite (16) als separates Bauteil wenigstens ein Abstützelement (20) zur Druckbeaufschlagung der Anpressplatte (10) durch eine Kraftbeaufschlagungsanordnung (50), insbesondere Membranfeder, aufweist.

2. Anpressplatte nach Anspruch 1,
**dadurch gekennzeichnet, dass** der Anpressplattenkörper (12) an der zweiten axialen Seite (16) eine Einsenkung (18) aufweist, in welcher das Abstützelement (20) wenigstens teilweise aufgenommen ist.

3. Anpressplatte nach Anspruch 2,
**dadurch gekennzeichnet, dass** das wenigstens eine Abstützelement (20) in der zugeordneten Einsenkung (18) gegen Bewegung in Umfangsrichtung gehalten ist.

4. Anpressplatte nach einem der Ansprüche 1 bis 3,
**dadurch gekennzeichnet, dass** das wenigstens eine Abstützelement (20) einen Abstütztvorsprung (22) für die Kraftbeaufschlagungsanordnung (50) aufweist.

5. Anpressplatte nach einem der Ansprüche 1 bis 4,
**dadurch gekennzeichnet, dass** das Abstützelement (20) ringartig ausgebildet ist.

6. Anpressplatte nach einem der Ansprüche 1 bis 5,
**dadurch gekennzeichnet, dass** der Anpressplattenkörper (12) aus Stahlmaterial oder einer Titanlegierung gebildet ist.

7. Anpressplatte nach einem der Ansprüche 1 bis 6,
**dadurch gekennzeichnet, dass** das wenigstens eine Abstützelement (20) aus dem gleichen Material aufgebaut ist, wie der Anpressplattenkörper (12).
